# EUROPEAN PATENT APPLICATION

(11) **EP 3 943 302 A2**
(43) Date of publication of application: **26.01.2022**
(21) Application number: 21175350.4
(22) Date of filing: 21.05.2021
(51) Int. Cl.: B32B 38/18

(54) **ATTACHING DEVICE AND COMPLEX-SURFACE ATTACHING INTERMEDIARY**

(30) Priority: 24.07.2020 US 202063056137 P; 20.11.2020 TW 109140776
(71) Applicant: Mirle Automation Corporation, Hsinchu 30076 (TW)
(72) Inventor: LIN, HUNG-PIN, 30076 HSINCHU (TW); CHEN, SHIH-CHUN, 30076 HSINCHU (TW); LEE, YEN-DAO, 30076 HSINCHU (TW)
(74) Representative: DREISS Patentanwälte PartG mbB

(57) **Abstract**

An attaching device (100) and a complex-surface attaching intermediary (6) are provided. The complex-surface attaching intermediary (6) includes a frame (61), a buffering assembly (63) movably assembled to the frame (61), and a flexible sheet (62) that is assembled to the frame (61) and the buffering assembly (63). The flexible sheet (62) includes a bonding region (621), a first fixing region (622), and a second fixing region (623), the latter two of which are respectively located at two opposite sides of the bonding region (621). The first fixing region (622) is fixed to the buffering assembly (63). The second fixing region (623) is fixed to the frame (61). When the flexible sheet (62) is compressed to increase a tension value thereof to reach a predetermined starting value, the first fixing region (622) is moved toward the bonding region (621) by an amount of displacement through the buffering assembly (63).

## Description

### FIELD OF THE DISCLOSURE

The present disclosure relates to an attaching device, and more particularly to an attaching device and a complex-surface attaching intermediary for a complex-surface attaching process.

### BACKGROUND OF THE DISCLOSURE

A conventional attaching device includes a carrying platform and a pressing mechanism, and is used to fix an attaching object onto an attached object by moving the pressing mechanism. However, since diverse types of attachment have been developed over the years, the structural design of the conventional attaching device can no longer meet current requirements for attachment.

### SUMMARY OF THE DISCLOSURE

In response to the above-referenced technical inadequacy, the present disclosure provides an attaching device and a complex-surface attaching intermediary to effectively improve on the issues associated with conventional attaching devices.

In one aspect, the present disclosure provides an attaching device, which includes a carrying mechanism, a pressing mechanism, and a complex-surface attaching intermediary. The carrying mechanism includes a carrying surface configured to hold an attached object having a first curved surface and a second curved surface, which have different centers of curvature. The pressing mechanism corresponds in position to the carrying mechanism and includes two pressing modules that are independently operable for respectively facing the first curved surface and the second curved surface. Each of the two pressing modules has a filled space, a filling opening is in spatial communication with the filled space, and a pressing member that defines at least part of the filled space. The pressing mechanism and the carrying mechanism are movable relative to each other, and any one of the two pressing modules is configured to fill a fluid into the filled space through the filling opening, so that the filled space expands to deform the pressing member. The complex-surface attaching intermediary is selectively disposed between the carrying surface and at least one of the two pressing modules. The complex-surface attaching intermediary includes a frame, a buffering assembly movably assembled to the frame, and a flexible sheet. The flexible sheet includes a bonding region, a first fixing region, and a second fixing region. The first fixing region and the second fixing region are respectively located at two opposite sides of the bonding region. The bonding region faces toward the carrying surface and is configured to adhere with an attaching object, the first fixing region is fixed to the buffering assembly, and the second fixing region is fixed to the frame. When the attaching device is operated to implement a first attaching process after the attached object is held by the carrying surface and the attaching object is adhered to the flexible sheet and faces toward the first curved surface, the first curved surface of the attached object and the pressing member that faces toward the first curved surface and that is deformed by the filled space jointly clamp and press against the flexible sheet and the attaching object, so that the attaching object is deformed and adhered onto the first curved surface of the attached object. When the flexible sheet is compressed to increase a tension value thereof to reach a predetermined starting value, the first fixing region is moved toward the bonding region by an amount of displacement through the buffering assembly.

In another aspect, the present disclosure provides a complex-surface attaching intermediary, which includes a frame, a buffering assembly movably assembled to the frame, and a flexible sheet. The flexible sheet includes a bonding region and a first fixing region, and a second fixing region. The first fixing region and the second fixing region are respectively located at two opposite sides of the bonding region. The bonding region is configured to adhere with an attaching object, the first fixing region is fixed to the buffering assembly, and the second fixing region is fixed to the frame. When the flexible sheet is compressed to increase a tension value thereof to reach a predetermined starting value, the first fixing region is toward the bonding region by an amount of displacement through the buffering assembly.

Therefore, in the complex-surface attaching intermediary of the attaching device of the present disclosure, the first fixing region of the flexible sheet can be moved by the amount of displacement, thereby avoiding damaging the flexible sheet when the flexible sheet is stretched beyond the tension value of the tension threshold value. Moreover, before the first attaching process, the amount of displacement of the first fixing region of the flexible sheet can be pre-calculated, so that the bonding region or the attaching object adhered thereon can be provided by offsetting the amount of displacement with respect to a predetermined position of the attached object. Accordingly, the attaching object can be precisely attached onto the predetermined position of the first curved surface of the attached object.

These and other aspects of the present disclosure will become apparent from the following description of the embodiment taken in conjunction with the following drawings and their captions, although variations and modifications therein may be affected without departing from the scope of the novel concepts of the disclosure.

### BRIEF DESCRIPTION OF THE DRAWINGS

The described embodiments may be better understood by reference to the following description and the accompanying drawings in which:
FIG. 1 is a schematic view showing an attaching device at an open position according to an embodiment of the present disclosure;
FIG. 2 is a schematic view showing the attaching device at a sealed position according to the embodiment of the present disclosure;
FIG. 3 is a schematic top view of a complex-surface attaching intermediary according to the embodiment of the present disclosure;
FIG. 4 is a schematic side view of FIG. 3;
FIG. 5 is a schematic top view showing the complex-surface attaching intermediary of FIG. 3 in an operation state according to the embodiment of the present disclosure;
FIG. 6 is a schematic side view of FIG. 5;
FIG. 7A is a schematic view showing the attaching device of FIG. 2 used to implement a first attaching process in a first manner;
FIG. 7B is a schematic view showing the attaching device of FIG. 2 used to implement the first attaching process in a second manner;.
FIG. 8 is a schematic view showing the attaching device moving an attaching object to attach onto an attached object according to the embodiment of the present disclosure; and
FIG. 9 is a schematic view showing the attaching device used to implement a second attaching process according to the embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

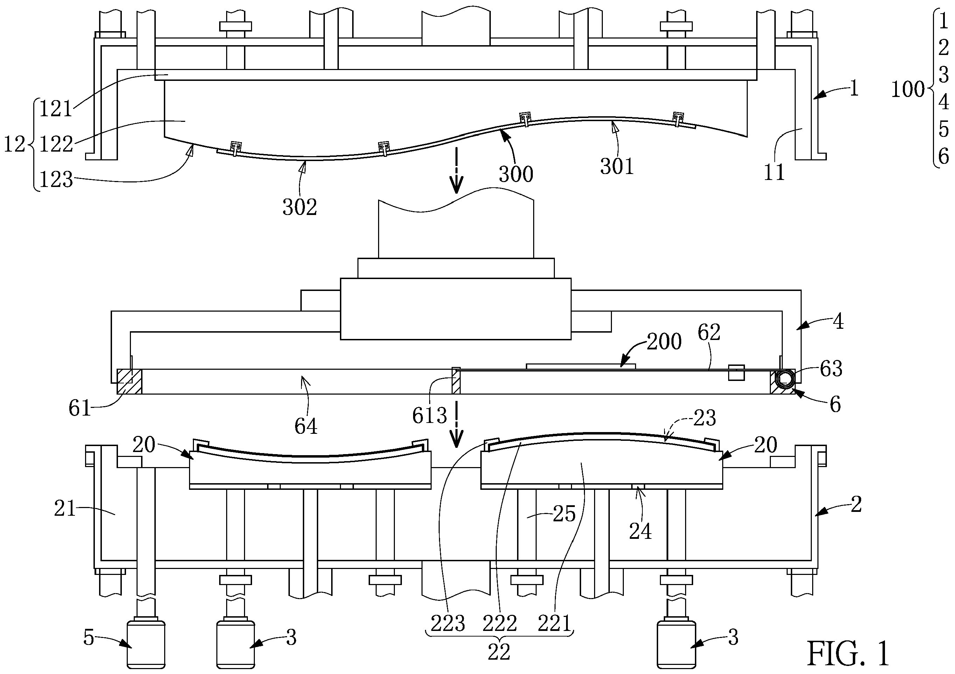

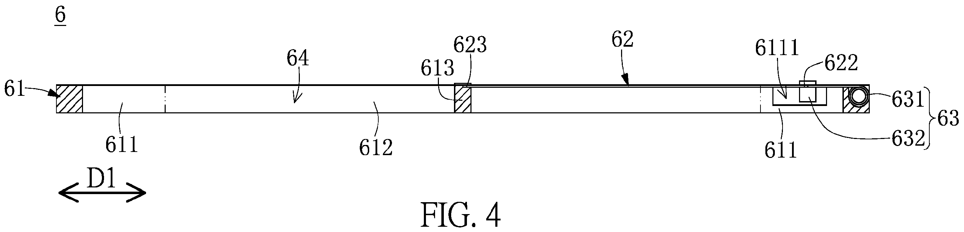

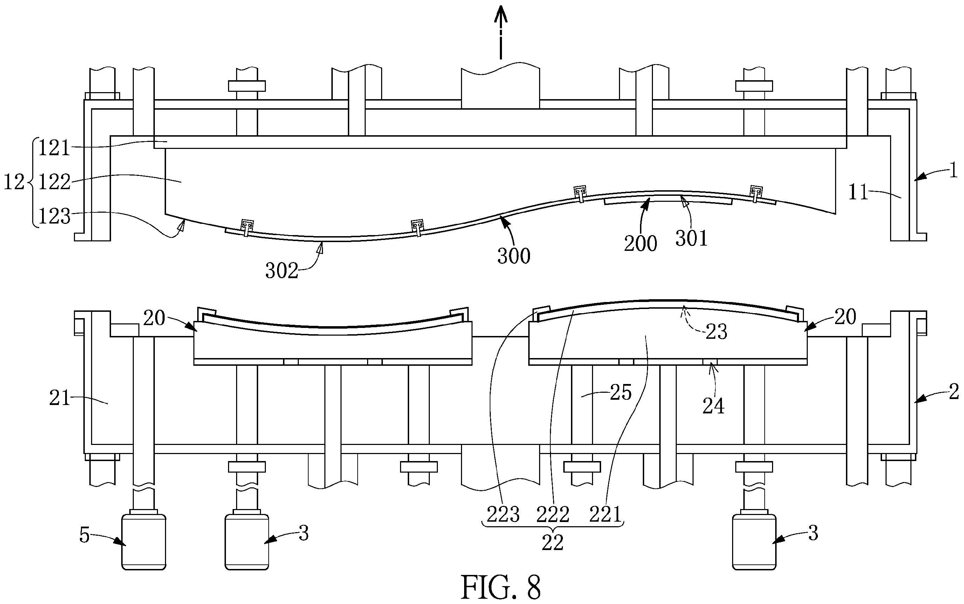

Referring to FIG. 1 to FIG. 9, an embodiment of the present disclosure provides an attaching device 100 configured to attach an attaching object 200 onto an attached object 300. The attached object 300 has a first curved surface 301 and a second curved surface 302, which have different centers of curvature, and the first curved surface 301 and the second curved surface 302 can be adjusted or changed according to design requirements (e.g., the first curved surface 301 and the second curved surface 302 can be a convex surface and a concave surface). In the present embodiment, the attached object 300 can be a curved glass (e.g., an S-shaped glass), and the attaching object 200 can be a display, but the present disclosure is not limited thereto.

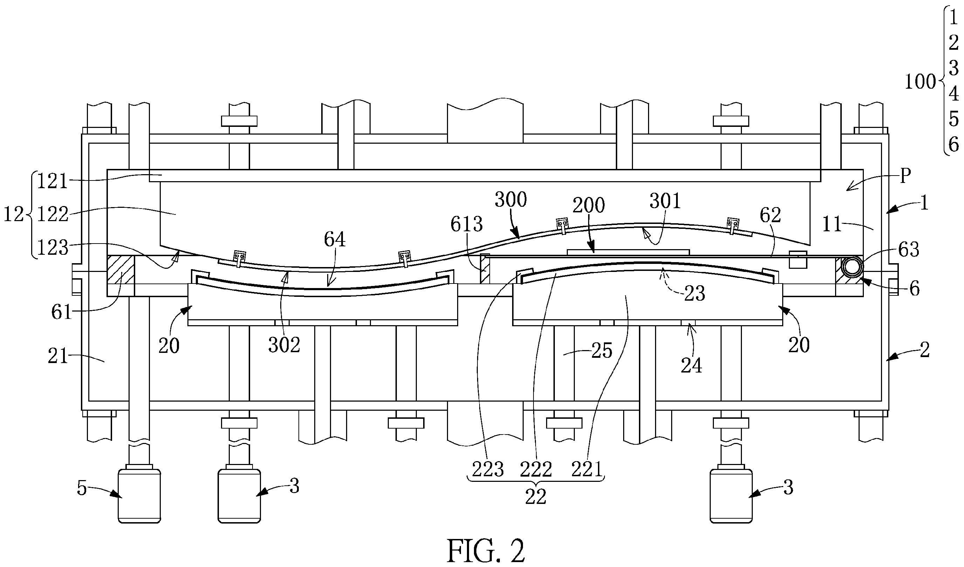

As shown in FIG. 1 and FIG. 2, the attaching device 100 in the present embodiment includes a carrying mechanism 1, a pressing mechanism 2 corresponding in position to the carrying mechanism 1, a filling mechanism 3 connected to the pressing mechanism 2, a transferring mechanism 4 disposed outside of the carrying mechanism 1 and the pressing mechanism 2, a suction mechanism 5 connected to the carrying mechanism 1 and/or the pressing mechanism 2, and a complex-surface attaching intermediary 6 that is selectively disposed between the carrying mechanism 1 and the pressing mechanism 2. Moreover, the pressing mechanism 2 and the carrying mechanism 1 are movable relative to each other.

It should be noted that the attaching device 100 in the present embodiment includes the above components, but the components can be added or omitted according to design requirements. For example, in other embodiments of the present disclosure, at least one of the suction mechanism 5, the filling mechanism 3, and the transferring mechanism 4 can be omitted; or, the position of the carrying mechanism 1 and the position of the pressing mechanism 2 can be exchanged. The following description describes the structure and connection relationship of the components of the attaching device 100.

As shown in FIG. 1, the carrying mechanism 1 includes a first chamber 11 and a carrying platform 12 that is arranged in the first chamber 11. The carrying platform 12 includes a carrying surface 123 configured to hold the attached object 300 thereupon (e.g., the attached object 300 can be fixed on the carrying surface 123 by a vacuum absorption, an adhesive manner, or an engagement manner). Moreover, the carrying surface 123 can be coated with a lubricating layer for preventing the attached object 300 from being scratched. In the present embodiment, the carrying surface 123 is a curved surface corresponding in shape to the attached object 300. Specifically, the carrying platform 12 can include a platform 121 and a mold 122 that is detachably assembled to the platform 121, and the mold 122 is formed with the carrying surface 123. Accordingly, the mold 122 can be changed according to the shape of the attached object 300.

The pressing mechanism 2 in the present embodiment includes a second chamber 21 and two pressing modules 20 that are disposed in the second chamber 21. The two pressing modules 20 are independently operable for respectively facing toward the first curved surface 301 and the second curved surface 302. Moreover, each of the two pressing modules 20 has a pressing member 22 disposed in the second chamber 21 and a lifting assembly 25. In each of the two pressing modules 20, the lifting assembly 25 is assembled to the second chamber 21 and is connected to the pressing member 22.

Specifically, each of the two pressing modules 20 has a filled space 23 and a filling opening 24 that is in spatial communication with the filled space 23. The filled space 23 and the filling opening 24 are arranged in the second chamber 21. Moreover, the filled space 23 of each of the two pressing modules 20 in the present embodiment is formed in the pressing member 22, but the present disclosure is not limited thereto. For example, in other embodiments of the present disclosure, the filled space 23 can be jointly defined by the pressing member 22 and other components. In other words, the pressing member 22 defines at least part of the filled space 23.

Furthermore, in each of the two pressing modules 20, the pressing member 22 of the present embodiment includes a seat 221 fixed to the lifting assembly 25, a bag 222 disposed on the seat 221, and a fixing frame 223 that fixes the bag 222 onto the seat 221. An interior space of the bag 222 is defined as the filled space 23, the seat 221 is formed with the filling opening 24, and the fixing frame 223 compresses and fixes a peripheral portion of the bag 222 onto the seat 221, so that the bag 222 (or the filled space 23) can be expanded to a predetermined shape. However, in other embodiments of the present disclosure, the structure of the pressing member 22 can be adjusted or changed according to design requirements.

Moreover, the filling mechanism 3 is arranged outside of the carrying mechanism 1 and the pressing mechanism 2, and the filling mechanism 3 is connected to the filling opening 24 of the pressing mechanism 2. Accordingly, the filling mechanism 3 is configured to selectively fill a fluid (e.g., gas or liquid) into the filled space 23 through the filling opening 24, so that the filled space 23 and/or the pressing member 22 can be gradually expanded. In other words, any one of the two pressing modules 20 can be configured to fill the fluid into the filled space 23 through the filling opening 24 (by the filling mechanism 3), so that the filled space 23 expands to deform the pressing member 22.

In addition, the operations of the two pressing modules 20 are substantially the same, but the seats 221 of the two pressing modules 20 are of different structure. In the present embodiment, curvatures of outer surfaces of the two seats 221 respectively correspond (e.g., equal) to curvatures of the first curved surface 301 and the second curved surface 302, but the present disclosure is not limited thereto.

Specifically, the pressing mechanism 2 and the carrying mechanism 1 are movable relative to each other between an open position (as shown in FIG. 1) and a sealed position (as shown in FIG. 2). In other words, at least one of the pressing mechanism 2 and the carrying mechanism 1 can be moved according to practical requirements.

As shown in FIG. 1, when the pressing mechanism 2 and the carrying mechanism 1 are at the open position, the first chamber 11 and the second chamber 21 are spaced apart from each other, so that the complex-surface attaching intermediary 6 can be selectively moved into or out of a space between the pressing mechanism 2 and the carrying mechanism 1. In the present embodiment, the transferring mechanism 4 (e.g., a robotic arm, a suction nozzle, or a magnetic attractor) is configured to hold and transfer the complex-surface attaching intermediary 6 so as to allow the complex-surface attaching intermediary 6 to be located between or outside of the pressing member 22 and the carrying surface 123.

As shown in FIG. 2, when the pressing mechanism 2 and the carrying mechanism 1 are at the sealed position, the first chamber 11 and the second chamber 21 jointly define a work space P, the complex-surface attaching intermediary 6 is arranged in the work space P, and the pressing member 22 of any one of the two pressing modules 20 can be moved toward or away from the carrying platform 12 through the lifting assembly 25. The suction mechanism 5 in the present embodiment is connected to the second chamber 21 of the pressing mechanism 2, and when the pressing mechanism 2 and the carrying mechanism 1 are at the sealed position, the suction mechanism 5 is configured to suction away air in the work space P so as to allow the work space P to be in a vacuum state, but the present disclosure is not limited thereto. For example, in other embodiments of the present disclosure, the suction mechanism 5 can be connected to the first chamber 11 of the carrying mechanism 1. Accordingly, the suction mechanism 5 in the present embodiment can be connected to at least one of the pressing mechanism 2 and the carrying mechanism 1.

It should be noted that the complex-surface attaching intermediary 6 in the present embodiment is described in cooperation with the above components, but the present disclosure is not limited thereto. For example, in other embodiments of the present disclosure, the complex-surface attaching intermediary 6 can be independently used (e.g., sold) or can be used in cooperation with other components.

As shown in FIG. 1, FIG. 3, and FIG. 4, the complex-surface attaching intermediary 6 includes a frame 61, a buffering assembly 63 movably assembled to the frame 61, and a flexible sheet 62 that is assembled to the buffering assembly 63 and the frame 61. The frame 61 in the present embodiment is in a rectangular shape and includes two end portions 611 respectively arranged on two opposite ends thereof (e.g., short edge portions of the rectangular shape), a fixing portion 613 disposed between the two end portions 611, and two long lateral portions 612 that are respectively arranged on another two opposite ends thereof (e.g., long edge portions of the rectangular shape). In order to clearly describe the present embodiment, a longitudinal direction of any one of the two long lateral portions 612 is defined as a predetermined direction D1. Moreover, each of the two end portions 611 is substantially in a U-shape, two distal ends of each of the two end portions 611 are respectively connected to the two long lateral portions 612, and the fixing portion 613 is connected to a substantial center portion of each of the two long lateral portions 612.

Specifically, the frame 61 has a plurality of guiding rails 6111. In the present embodiment, a quantity of the guiding rails 6111 is two, and the two guiding rails 6111 are respectively formed in two corner portions of the frame 61. In other words, one of the two end portions 611 is formed with the two guiding rails 6111 that are respectively located adjacent to the two long lateral portions 612, and a longitudinal direction of each of the guiding rails 6111 is parallel to the predetermined direction D1, but the present disclosure is not limited thereto.

Moreover, the frame 61 has a plurality of catch regions 6112 respectively formed on the two end portions 611, and the catch regions 6112 correspond in structure to the transferring mechanism 4, so that the transferring mechanism 4 can hold and move the complex-surface attaching intermediary 6 by holding the catch regions 6112. For example, if the transferring mechanism 4 is a robotic arm, the catch regions 6112 are notches for being clamped by the robotic arm; or, if the transferring mechanism 4 is a magnetic attractor, the catch regions 6112 are magnetic members for being attracted by the magnetic attractor.

The flexible sheet 62 includes a bonding region 621, a first fixing region 622, and a second fixing region 623, the latter two of which are respectively located at two opposite sides of the bonding region 621. The flexible sheet 62 in the present embodiment is in a rectangular shape, the first fixing region 622 and the second fixing region 623 respectively correspond in position to two short edges of the flexible sheet 62 (i.e., the first fixing region 622 and the second fixing region 623 are spaced apart from each other along the predetermined direction D1), and the bonding region 621 is arranged on a portion of the flexible sheet 62 adjacent to the second fixing region 623 (i.e., a distance between the bonding region 621 and the first fixing region 622 is different from a distance between the bonding region 621 and the second fixing region 623), but the present disclosure is not limited thereto. For example, in other embodiments of the present disclosure, the bonding region 621 can be arranged on a portion of the flexible sheet 62 adjacent to the first fixing region 622.

Moreover, the first fixing region 622 of the flexible sheet 62 is fixed to the buffering assembly 63, and the second fixing region 623 is fixed to the fixing portion 613 of the frame 61. The bonding region 621 is spaced apart from the buffering assembly 63 along the predetermined direction D1 by a first distance L1, the bonding region 621 is spaced apart from the fixing portion 613 along the predetermined direction D1 by a second distance L2 different from the first distance L1, and the flexible sheet 62 is preferably spaced apart from the two long lateral portions 612 of the frame 61. The bonding region 621 is configured to adhere with the attaching object 200, and when the complex-surface attaching intermediary 6 is arranged in the work space P, the bonding region 621 faces toward the carrying surface 123, so that the attaching object 200 can face toward the carrying surface 123 or the attached object 300 held thereon.

Specifically, the flexible sheet 62 in the present embodiment is a dual-film structure, which includes a bottom film 62a and a bonding film 62b. The first fixing region 622 and the second fixing region 623 are arranged on the bottom film 62a, the bonding region 621 is arranged on the bonding film 62b, and a coefficient of elasticity of the bonding film 62b is less than that of the bottom film 62a. The bonding film 62b in the present embodiment is stacked onto the bottom film 62a, but the present disclosure is not limited thereto. For example, in other embodiments of the present disclosure, the flexible sheet 62 can be a single film structure.

The buffering assembly 63 includes an elastic member 631 and a positioning member 632 that is movably disposed on the frame 61. In the present embodiment, the elastic member 631 is a spring, and the positioning member 632 is a rod, but the present disclosure is not limited thereto. For example, in other embodiments of the present disclosure, the elastic member 631 can be a component with a resilient material (e.g., rubber); or, the elastic member 631 and the positioning member 632 can be integrally formed as a single one-piece structure.

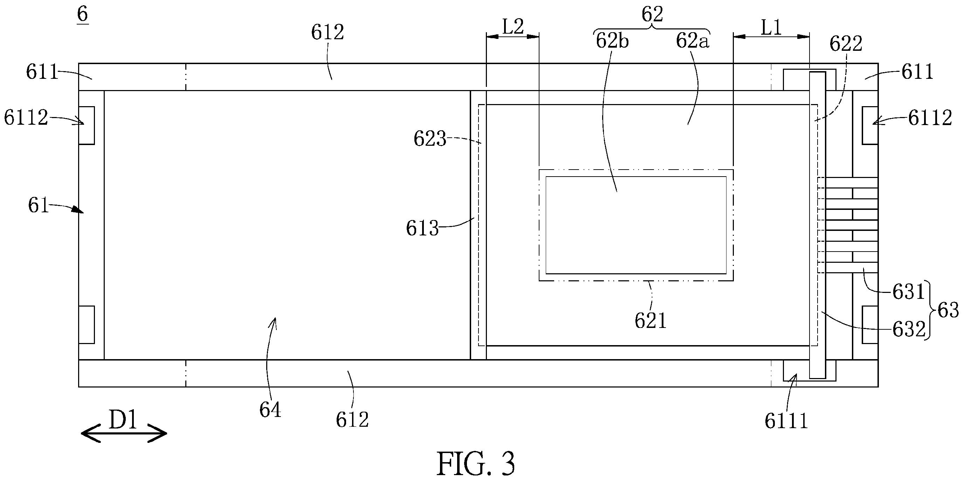

Specifically, as shown in FIG. 3 to FIG. 6, one end of the elastic member 631 is fixed to the frame 61 (e.g., the buffering assembly 63 is movably assembled to one of the two end portions 611), and another end of the elastic member 631 is fixed to the positioning member 632. Moreover, the positioning member 632 is movably disposed on the guiding rails 6111, the first fixing region 622 is fixed to the positioning member 632, and the second fixing region 623 is fixed to the fixing portion 613, so that the positioning member 632 is elastically movable along the guiding rails 6111 relative to the frame 61 through the elastic member 631, but the present disclosure is not limited thereto. For example, in other embodiments of the present disclosure, the guiding rails 6111 of the frame 61 can be omitted, the positioning member 632 of the buffering assembly 63 can be omitted, and the elastic member 631 is directly fixed to the first fixing region 622.

In addition, as shown in FIG. 2 to FIG. 4, the complex-surface attaching intermediary 6 has a thru-hole 64 arranged between the fixing portion 613 and another one of the two end portions 611. In other words, the flexible sheet 62 and the thru-hole 64 are respectively located at two opposite sides of the fixing portion 613 and are respectively aligned with the first curved surface 301 and the second curved surface 302. Moreover, the complex-surface attaching intermediary 6 can be held by at least one of the pressing mechanism 2 and the carrying mechanism 1 through the frame 61, but the connection structure between the complex-surface attaching intermediary 6 and at least one of the pressing mechanism 2 and the carrying mechanism 1 can be adjusted or changed according to design requirements and is not limited to the present embodiment.

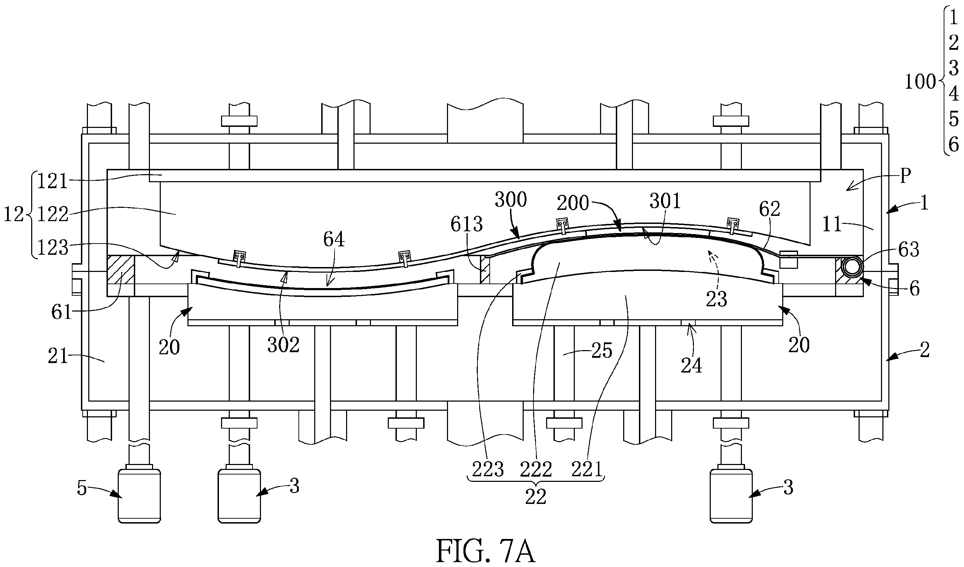

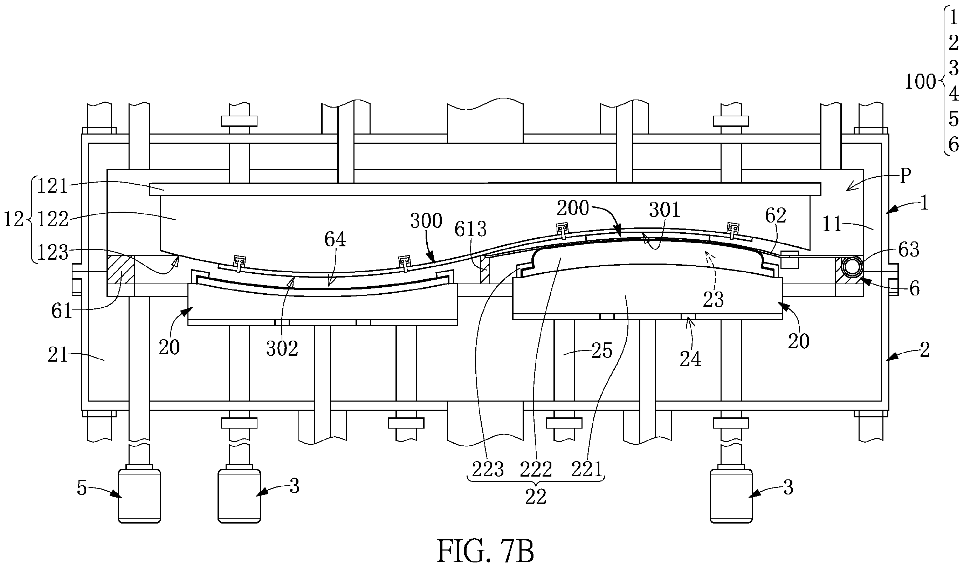

As shown in FIG. 2, FIG. 7A, and FIG. 7B, when the attaching device 100 is operated to implement a first attaching process after the attached object 300 is held by the carrying surface 123 and the attaching object 200 is adhered to the flexible sheet 62 and faces toward the first curved surface 301, the first curved surface 301 of the attached object 300 and the pressing member 22 that faces toward the first curved surface 301 and that is deformed by the filled space 23 jointly clamp and press against the flexible sheet 62 and the attaching object 200, so that the attaching object 200 is deformed and adhered onto the first curved surface 301 of the attached object 300. Furthermore, in the first attaching process, the thru-hole 64 of the complex-surface attaching intermediary 6 is configured to provide insertion of the second curved surface 302 (e.g., a convex surface) of the attached object 300. It should be noted that the first attaching process in the present embodiment can be implemented by selecting one of the following two manners according to practical requirements.

As shown in FIG. 7A, when the first attaching process is implemented in a first manner, the corresponding pressing module 20 facing toward the first curved surface 301 is configured to gradually expand the filled space 23 toward the flexible sheet 62 so as to allow the pressing member 22 to gradually press against the flexible sheet 62, thereby gradually deforming the flexible sheet 62 toward the carrying surface 123 to deform and adhere the attaching object 200 onto the first curved surface 301 of the attached object 300.

As shown in FIG. 7B, when the first attaching process is implemented in a second manner, the carrying mechanism 1 is configured to allow the attached object 300 held by the carrying surface 123 to be moved toward and abutted against the flexible sheet 62 (by using a component that can lift the carrying platform 12) so as to cause the attaching object 200 and the flexible sheet 62 to gradually press against the pressing member 22 that faces toward the first curved surface 301 and that is deformed by the filled space 23, thereby deforming and adhering the attaching object 200 onto the first curved surface 301 of the attached object 300.

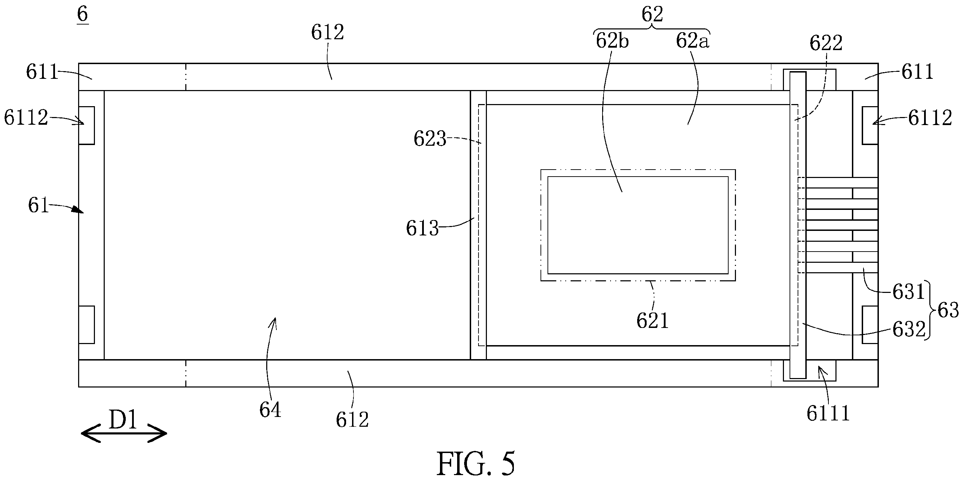

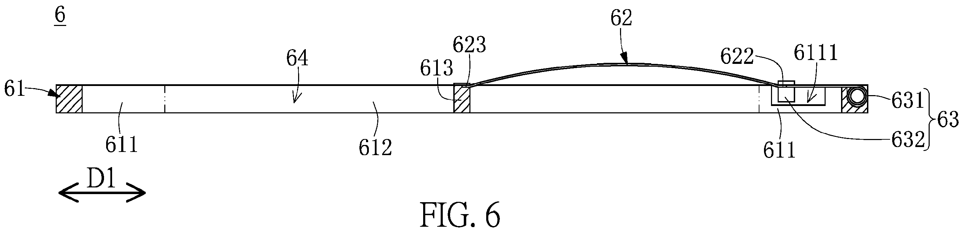

Specifically, as shown in FIG. 5 and FIG. 6, when the flexible sheet 62 is compressed to increase a tension value thereof to reach a predetermined starting value, the first fixing region 622 is moved toward the bonding region 621 by an amount of displacement through the buffering assembly 63. Moreover, the predetermined starting value is less than a tension threshold value where the flexible sheet 62 (e.g., the bottom film 62a) ruptures or is elastically fatigued. In the present embodiment, when the flexible sheet 62 is compressed to increase the tension value thereof to reach the predetermined starting value, the positioning member 632 is moved along the guiding rails 6111 relative to the frame 61 by the amount of displacement.

Accordingly, the first fixing region 622 of the flexible sheet 62 can be moved by the amount of displacement, thereby avoiding damaging the flexible sheet 62 when the flexible sheet 62 is stretched beyond the tension value of the tension threshold value. Before the first attaching process, the amount of displacement of the first fixing region 622 of the flexible sheet 62 can be pre-calculated, so that the bonding region 621 or the attaching object 200 adhered thereon can be provided by offsetting the amount of displacement with respect to a predetermined position of the attached object 300. Accordingly, the attaching object 200 can be precisely attached onto the predetermined position of the first curved surface 301 of the attached object 300.

Moreover, the coefficient of elasticity of the bonding film 62b in the flexible sheet 6 is less than that of the bottom film 62a, so that when the bottom film 62a is stretched and deformed, the attaching object 200 adhered to the bonding film 62b can be less affected by the stretched bottom film 62a for effectively increasing the stability and accuracy of the attaching process.

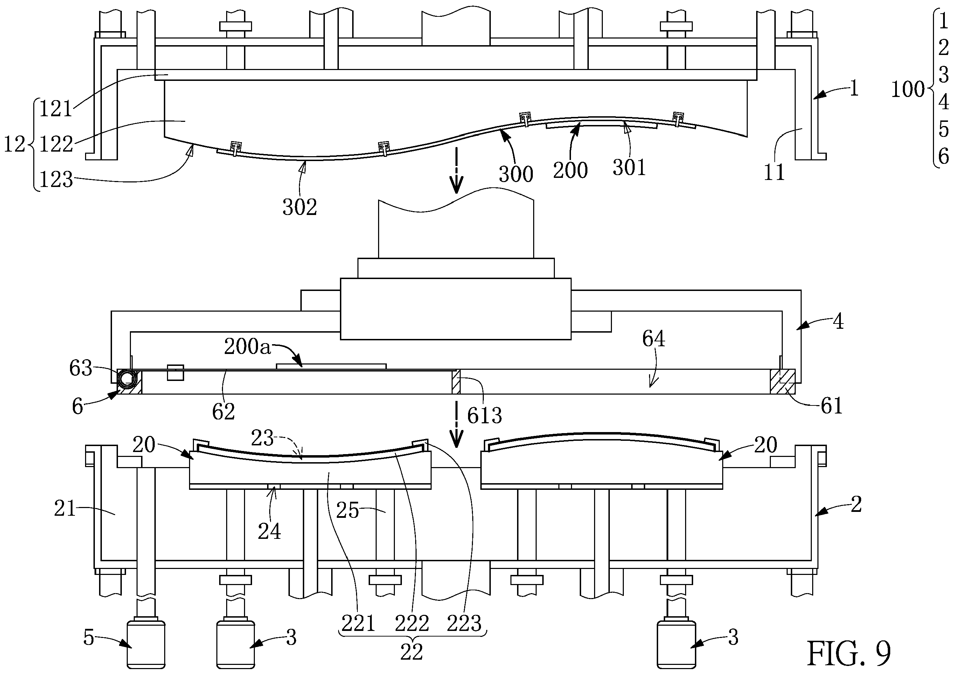

In addition, if the second curved surface 302 of the attached object 300 has an attaching requirement (as shown in FIG. 9), after the first attaching process is implemented by the attaching device 100, the attaching device 100 can be used to implement a second attaching process. The operation of the second attaching process is similar to the operation of the first attaching process. Specifically, in the second attaching process, another attaching object 200a is adhered onto the flexible sheet 62 and faces toward the second curved surface 302 by rotating the complex-surface attaching intermediary 6 at 180 degrees, and the attaching object 200a can be deformed and adhered to the second curved surface 302 of the attached object 300 by the attaching device 100.

Accordingly, the attaching device 100 can be used to implement the first attaching process and/or the second attaching process through a structural design thereof, thereby satisfying the different attaching requirements of the attached object 300. For example, the attached object 300 may only have an attaching requirement for the first curved surface 301; or, the attached object 300 may have an attaching requirement for the first curved surface 301 and the second curved surface 302.

Moreover, in other embodiments of the present disclosure, the attaching device 100 can include an additional complex-surface attaching intermediary that is similar to the complex-surface attaching intermediary 6, so that the attaching device 100 can be used to implement the second attaching process through the additional complex-surface attaching intermediary.

### [Beneficial Effects of the Embodiment]

In conclusion, in the complex-surface attaching intermediary of the attaching device of the present disclosure, the first fixing region of the flexible sheet can be moved by the amount of displacement, thereby avoiding damaging the flexible sheet when the flexible sheet is stretched beyond the tension value of the tension threshold value. Before the first attaching process, the amount of displacement of the first fixing region of the flexible sheet can be pre-calculated, so that the bonding region or the attaching object adhered thereon can be provided by offsetting the amount of displacement with respect to a predetermined position of the attached object. Accordingly, the attaching object can be precisely attached onto the predetermined position of the first curved surface of the attached object.

Moreover, in the complex-surface attaching intermediary of the attaching device of the present disclosure, the coefficient of elasticity of the bonding film in the flexible sheet is less than that of the bottom film, so that when the bottom film is stretched and deformed, the attaching object adhered to bonding film can be less affected by the stretched bottom film for effectively increasing the stability and accuracy of the attaching process.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. An attaching device (100), **characterized by** comprising:
a carrying mechanism (1) including a carrying surface (123) configured to hold an attached object (300) having a first curved surface (301) and a second curved surface (302), which have different centers of curvature;
a pressing mechanism (2) corresponding in position to the carrying mechanism (1), wherein the pressing mechanism (2) includes two pressing modules (20) being independently operable for respectively facing toward the first curved surface (301) and the second curved surface (302), wherein each of the two pressing modules (20) has a filled space (23), a filling opening (24) being in spatial communication with the filled space (23), and a pressing member (22) that defines at least part of the filled space (23), and wherein the pressing mechanism (2) and the carrying mechanism (1) are movable relative to each other, and any one of the two pressing modules (20) is configured to fill a fluid into the filled space (23) through the filling opening (24), so that the filled space (23) expands to deform the pressing member (22); and
a complex-surface attaching intermediary (6) selectively disposed between the carrying surface (123) and at least one of the two pressing modules (20), wherein the complex-surface attaching intermediary (6) includes:
a frame (61);
a buffering assembly (63) movably assembled to the frame (61); and
a flexible sheet (62) including a bonding region (621), a first fixing region (622), and a second fixing region (623), wherein the first fixing region (622) and the second fixing region (623) are respectively located at two opposite sides of the bonding region (621), and wherein the bonding region (621) faces toward the carrying surface (123) and is configured to adhere with an attaching object (200), the first fixing region (622) is fixed to the buffering assembly (63), and the second fixing region (623) is fixed to the frame (61);
wherein, when the attaching device (100) is operated to implement a first attaching process after the attached object (300) is held by the carrying surface (123) and the attaching object (200) is adhered to the flexible sheet (62) and faces toward the first curved surface (301), the first curved surface (301) of the attached object (300) and the pressing member (22) that faces toward the first curved surface (301) and that is deformed by the filled space (23) jointly clamp and press against the flexible sheet (62) and the attaching object (200), so that the attaching object (200) is deformed and adhered onto the first curved surface (301) of the attached object (300), and wherein, when the flexible sheet (62) is compressed to increase a tension value thereof to reach a predetermined starting value, the first fixing region (622) is moved toward the bonding region (621) by an amount of displacement through the buffering assembly (63).

2. The attaching device (100) according to claim 1, wherein, in the first attaching process, the corresponding pressing module (20) facing toward the first curved surface (301) is configured to cause the filled space (23) to gradually expand toward the flexible sheet (62) to allow the pressing member (22) to gradually press against the flexible sheet (62), so as to gradually deform the flexible sheet (62) toward the carrying surface (123) to deform and adhere the attaching object (200) onto the first curved surface (301) of the attached object (300).

3. The attaching device (100) according to claim 1, wherein, in the first attaching process, the carrying mechanism (1) is configured to allow the attached object (300) held by the carrying surface (123) to move toward and abut against the flexible sheet (62) to cause the attaching object (200) and the flexible sheet (62) to gradually press against the pressing member (22) that faces toward the first curved surface (301) and that is deformed by the filled space (23), so as to deform and adhere the attaching object (200) onto the first curved surface (301) of the attached object (300).

4. The attaching device (100) according to claim 1, wherein the pressing mechanism (2) and the carrying mechanism (1) are movable relative to each other between a sealed position and an open position, wherein the attaching device (100) further includes a suction mechanism (5) connected to at least one of the pressing mechanism (2) and the carrying mechanism (1), and wherein, when the pressing mechanism (2) and the carrying mechanism (1) are at the sealed position, the pressing mechanism (2) and the carrying mechanism (1) surroundingly form a work space (P), and the suction mechanism (5) is configured to suction away air in the work space (P) so as to allow the work space (P) to be in a vacuum state.

5. The attaching device (100) according to claim 4, further comprising a transferring mechanism (4) disposed outside of the pressing mechanism (2) and the carrying mechanism (1), and wherein, when the pressing mechanism (2) and the carrying mechanism (1) are at the open position, the transferring mechanism (4) is configured to hold and transfer the complex-surface attaching intermediary (6) so as to allow the complex-surface attaching intermediary (6) to be located between or outside of the carrying surface (123) and the at least one of the two pressing modules (20).

6. The attaching device (100) according to claim 1, wherein the frame (61) includes two end portions (611) that are arranged on two opposite ends thereof and a fixing portion (613) that is disposed between the two end portions (611), the buffering assembly (63) is movably assembled to one of the two end portions (611), and the second fixing region (623) is fixed to the fixing portion (613), and wherein the bonding region (621) is spaced apart from the buffering assembly (63) by a first distance (L1), and the bonding region (621) is spaced apart from the fixing portion (613) by a second distance (L2) that is different from the first distance (L1).

7. The attaching device (100) according to claim 1, wherein the frame (61) includes two end portions (611) that are arranged on two opposite ends thereof and a fixing portion (613) that is disposed between the two end portions (611), the buffering assembly (63) is movably assembled to one of the two end portions (611), the second fixing region (623) is fixed to the fixing portion (613), and the complex-surface attaching intermediary (6) has a thru-hole (64) arranged between the fixing portion (613) and another one of the two end portions (611), and wherein, in the first attaching process, the thru-hole (64) of the complex-surface attaching intermediary (6) is configured to provide for insertion of the second curved surface (302) of the attached object (300).

8. The attaching device (100) according to claim 1, wherein the flexible sheet (62) includes a bottom film (62a) and a bonding film (62b), the first fixing region (622) and the second fixing region (623) are arranged on the bottom film (62a), the bonding region (621) is arranged on the bonding film (62b), and a coefficient of elasticity of the bonding film (62b) is less than a coefficient of elasticity of the bottom film (62a), and wherein the predetermined starting value is less than a tension threshold value where the bottom film (62a) ruptures or is elastically fatigued.

9. The attaching device (100) according to claim 1, wherein the buffering assembly (63) includes an elastic member (631) and a positioning member (632) that is movably disposed on the frame (61), and the first fixing region (622) is fixed to the positioning member (632) of the buffering assembly (63), and the elastic member (631) is fixed to the frame (61) and the positioning member (632), so that the positioning member (632) is elastically movable relative to the frame (61) through the elastic member (631).

10. The attaching device (100) according to claim 7, wherein the frame (61) has a plurality of guiding rails (6111), and the positioning member (632) is movably disposed on the guiding rails (6111), and wherein, when the flexible sheet (62) is compressed to increase the tension value thereof to reach the predetermined starting value, the positioning member (632) is moved along the guiding rails (6111) relative to the frame (61) by the amount of displacement.

11. A complex-surface attaching intermediary (6), **characterized by** comprising:
a frame (61);
a buffering assembly (63) movably assembled to the frame (61); and
a flexible sheet (62) including a bonding region (621), a first fixing region (622), and a second fixing region (623), wherein the first fixing region (622) and the second fixing region (623) are respectively located at two opposite sides of the bonding region (621), and wherein the bonding region (621) is configured to adhere with an attaching object (200), the first fixing region (622) is fixed to the buffering assembly (63), and the second fixing region (623) is fixed to the frame (61);
wherein, when the flexible sheet (62) is compressed to increase a tension value thereof to reach a predetermined starting value, the first fixing region (622) is moved toward the bonding region (621) by an amount of displacement through the buffering assembly (63).

12. The complex-surface attaching intermediary (6) according to claim 11, wherein the frame (61) includes two end portions (611) that are arranged on two opposite ends thereof and a fixing portion (613) that is disposed between the two end portions (611), the buffering assembly (63) is movably assembled to one of the two end portions (611), and the second fixing region (623) is fixed to the fixing portion (613), and wherein the bonding region (621) is spaced apart from the buffering assembly (63) by a first distance (L1), and the bonding region (621) is spaced apart from the fixing portion (613) by a second distance (L2) that is different from the first distance (L1).

13. The complex-surface attaching intermediary (6) according to claim 11, wherein the flexible sheet (62) includes a bottom film (62a) and a bonding film (62b), the first fixing region (622) and the second fixing region (623) are arranged on the bottom film (62a), the bonding region (621) is arranged on the bonding film (62b), and a coefficient of elasticity of the bonding film (62b) is less than a coefficient of elasticity of the bottom film (62a), and wherein the predetermined starting value is less than a tension threshold value where the bottom film (62a) ruptures or is elastically fatigued.

14. The complex-surface attaching intermediary (6) according to claim 11, wherein the first buffering assembly (63) includes an elastic member (631) and a positioning member (632) that is movably disposed on the frame (61), and the first fixing region (622) is fixed to the positioning member (632) of the buffering assembly (63), and wherein the elastic member (631) is fixed to the frame (61) and the positioning member (632), so that the positioning member (632) is elastically movable relative to the frame (61) through the elastic member (631).

15. The complex-surface attaching intermediary (6) according to claim 14, wherein the frame (61) has a plurality of guiding rails (6111), and the positioning member (632) (63) is movably disposed on the guiding rails (6111), and wherein, when the flexible sheet (62) is compressed to increase the tension value thereof to reach the predetermined starting value, the positioning member (632) is moved along the guiding rails (6111) relative to the frame (61) by a same amount of displacement.
